# EUROPÄISCHE PATENTSCHRIFT

(11) **EP 0 499 095 B1**
(45) Veröffentlichungstag und Bekanntmachung des Hinweises auf die Patenterteilung: **14.11.2001**
(21) Anmeldenummer: 92101510.3
(22) Anmeldetag: 30.01.1992
(51) Int. Cl.: B01D 53/46, C10K 1/34

(54) **Katalysatoren zur Entfernung von Schwefelverbindungen aus technischen Gasen, Verfahren zu deren Herstellung sowie deren Verwendung**
Catalysts for removing sulphuric compounds from technical gases, process for preparation and application
Catalyseurs pour la séparation de composés sulfurés de gaz techniques, procédé de préparation et application

(30) Priorität: 12.02.1991 DE 4104202
(43) Veröffentlichungstag der Anmeldung: 19.08.1992
(73) Patentinhaber: BAYER AG, 51368 Leverkusen (DE)
(72) Erfinder: Immel, Otto, Dr., W-4150 Krefeld (DE); Müller, Harald, Dr., W-4074 Dormagen (DE)

(56) Entgegenhaltungen:
- EP-A- 0 100 512
- DE-A- 1 667 590
- DE-A- 3 020 975
- FR-A- 1 541 573

## Beschreibung

Die Erfindung betrifft Katalysatoren, mit denen Schwefelverbindungen aus technischen Gasen bereits bei niedrigen Temperaturen praktisch vollständig entfernt werden können, ein Verfahren zur Herstellung dieser Katalysatoren sowie deren Verwendung zur Entfernung von Schwefelverbindungen aus technischen Gasen.

Schwefelhaltige Verbindungen, wie z.B. Kohlenstoffoxysulfid, Schwefelkohlenstoff und Schwefelwasserstoff, stellen häufig auftretende Verunreinigungen von technischen Gasen, wie beispielsweise Kohlenmonoxid, Kohlendioxid, Stickstoff, Methan und Erdgas, dar. Sie bilden sich z.B. bei der Verarbeitung von schwefelhaltigen gasförmigen, flüssigen oder festen Ausgangsstoffen wie Erdgas, Erdöl, Koks und Kohle.

Die Entfernung solcher schwefelhaltiger Bestandteile aus technischen Gasen ist im Hinblick auf z.B. Katalysatorschädigungen, Korrosion, unerwünschte Nebenreaktionen bei der organischen und anorganischen Synthese sowie auch im Hinblick auf die hohe Toxizität der schwefelhaltigen Komponenten selbst in geringen Konzentrationen in vielen Fällen notwendig.

Während Schwefelwasserstoff als häufigster Begleiter von Kohlenstoffoxysulfid und Schwefelkohlenstoff nach einer Vielzahl von bekannten Verfahren aus Gasen entfernt werden kann, ist die gleichzeitige Entfernung von Kohlenstoffoxysulfid und Schwefelkohlenstoff aus Gasen problematisch.

Adsorptionsmittel wie Aktivkohle, Zeolithe oder Silicagel besitzen, wie allgemein bekannt ist, nur ein sehr geringes Aufnahmevermögen für Kohlenstoffoxysulfid und Schwefelkohlenstoff. Gasreinigungen wie beispielsweise Gaswäsche mit flüssigen basischen Medien, erfordern einen hohen Aufwand, da die Löslichkeit von Kohlenstoffoxysulfid und Schwefelkohlenstoff hierin gering ist. Ferner ist die Aufarbeitung der verbrauchten Lösungen mit Umweltproblemen verbunden.

Eingang in die Technik haben Verfahren gefunden, in denen Kohlenstoffoxysulfid und Schwefelkohlenstoff an festen Medien, in der Regel Zeolithe, Aluminiumoxid und ähnliche, zu Schwefelwasserstoff konvertiert werden und der Schwefelwasserstoff anschließend nach bekannten üblichen Verfahren aus dem Gasgemisch entfernt wird,

Der Nachteil dieser Verfahren ist ihr hoher Energieaufwand, da die Konvertierungen von Kohlenstoffoxysulfid oder Schwefelkohlenstoff nur bei hohen Temperaturen, in der Regel 400 - 800°C, ablaufen.

Ein aus der DE-A-1 667 590 zur Vernichtung von Kohlenstoffoxysulfid aus Gasen bekanntes Verfahren verwendet bestimmte Schwermetalloxide als Katalysatoren auf Aktivkohle als Träger, wobei die Konvertierungsreaktion bei Temperaturen > 20°C abläuft. Aufgrund des Abriebes der Kohle sowie ihrer Brennbarkeit ist dieses Verfahren sehr nachteilig.

Es ist weiterhin aus DE-A-220 394 oder aus EP-A-0 100 512 bekannt, als Katalysator für die Umsetzung von Kohlnstoffoxysulfid mit Wasserdampf Aluminiumoxid zu verwenden, das Molybdän, Eisen, Wolfram, Nickel oder Kobalt oder bestimmte Kombinationen dieser Metalle enthält. Dabei werden diese Metalle im allgemeinen als Sulfide eingesetzt. Für die hydrolytische Umsetzung von Kohlenstoffoxysulfid und Schwefelkohlenstoff sind jedoch unwirtschaftlich hohe Temperaturen von 250-400°C erforderlich.

Aufgabe war es daher Katalysatoren zur Verfügung zu stellen, die eine praktisch vollständige Entfernung von Schwefelverbindungen bereits bei niedrigen Temperaturen aus Gasen erlauben, ohne daß die oben genannten Nachteile auftreten.

Diese Aufgabe konnte überraschenderweise mit den erfindungsgemäßen Katalysatoren gelost werden.

Gegenstand der Erfindung sind Katalysatoren die eine quantitative Entfernung von Schwefelverbindungen aus technischen fasen bereits bei niedrigen Temperaturen von 20-150°C erlauben wobei die Katalysatoren aus einem anorganischen, abriebfesten, nicht brennbaren Träger bestehen, der mit einem Gemisch aus Oxiden der Metalle aus der Gruppe bestehend aus Cu, Zn, Fe, Co, Ni, Cr, Mo, W gleichmäßig imprägniert ist, wobei das Gemisch aus Oxiden von mindestens drei Metallen besteht, von denen ein Metall aus der gruppe bestehend aus Cr, Mo, W stammt.

Geeignet sind Katalysatoren, deren anorganischer Träger Aluminiumoxid, ein Spinell, insbesondere Magnesium-Aluminium-Oxid, ein Zeolith oder Glimmer ist und eine Oberfläche von 20-400 m²/g aufweist.

Erfindungsgemäß ist der Träger mit wäßrigen Lösungen von Nitraten und Acetaten von Metallen bestehend aus Cu, Zu, Fe, Co und Ni und Ammoniumsalzen der Chromate, Molybdate, und/oder Wolframate getränkt oder besprüht.

Erfindungsgemäß ist der anorganische Träger mit Metalloxiden in einer Menge von jeweils 0,05 - 4 Gew.-%, vorzugsweise 0,1 - 2 Gew.-%, bezogen auf die Menge des Trägermaterials imprägniert.

Insbesondere besteht der Katalysator aus Aluminiumoxid als Träger und Kupferoxid, Eisenoxid, Molybdänoxid, Chromoxid und Zinkoxid als Imprägnierung.

Ein weiterer Gegenstand der Erfindung ist ein Verfahren zur Herstellung der erfindungsgemäßen Katalysatoren, wobei der anorganische Träger in Granulatform mit einem mittleren Durchmesser von 0,1 - 20 mm,insbesondere 1 - 10 mm vorgelegt wird, mit wäßrigen Lösungen von Verbindungen von Metallen aus der Gruppe bestehend aus Cu, Zn, Fe, Co, Ni, Cr, Mo, W gleichmäßig behandelt wird, wobei mindestens drei Metallverbindungen aufgebracht werden, von denen ein Metall aus der Gruppe bestehend aus Cr, Mo, W stammt, getrocknet und bei 200 - 500°C, vorzugsweise 280 - 420°C getempert wird.

Erfindungsgemäß werden wäßrige Lösungen von Nitraten und/oder Acetaten der Metalle aus der Gruppe bestehend aus Cu, Zn, Fe, Co, Ni und Ammoniumsalze der Chromate, Molybdate und/oder Wolframate eingesetzt.

In einer bevorzugten Verfahrensvariante wird der Träger mit mehreren Lösungen mit einer oder mehreren Verbindungen der Metalle nacheinander behandelt und gegebenenfalls nach jeder Behandlung getrocknet.

Die wäßrigen Lösungen der Verbindungen der Metalle werden durch Tauchen des Trägers in die entsprechenden wäßrigen Lösungen oder durch Besprühen des Trägers mit den entsprechenden wäßrigen Lösungen gleichmäßig aufgetragen.

Die erfindungsgemäßen Katalysatoren werden zur praktisch vollständigen Entfernung von Schwefelverbindungen, insbesondere COS, CS₂ und organischen Schwefelverbindungen, insbesondere Mercaptane aus technischen Gasen, insbesondere Methan, CO₂, N₂, CO und Erdgas verwendet.

Bei der Verwendung der erfindungsgemäßen Katalysatoren zur Entfernung von Schwefelverbindungen aus technischen Gasen werden vorzugsweise die zu reinigenden Gase
a) mit Wasserdampf beladen, anschließend
b) über einen erfindungsgemäßen Katalysator bei Temperaturen zwischen 20 und 150°C geleitet und dann
c) von dem in b) gebildeten sowie von dem von vornherein im Gas vorhandenen Schwefelwasserstoff befreit.

Vorzugsweise wird der Schwefelwasserstoff in c) entfernt, indem die Gase nach b) zusammen mit Luft und/oder Sauerstoff über einen erfindungsgemäßen Katalysator bei Temperaturen von 15 bis 50°C geleitet werden und dieser Katalysator regeneriert wird, vorzugsweise mit Wasserdampf, um den in c) gebildeten Schwefel vom Katalysator zu entfernen.

Die Katalysatoren erlauben eine quantitative Entfernung der vorgenannten schwefelhaltigen Verbindungen aus Gasen bei niedrigen Temperaturen (20 - 150°C) und kürzesten Verweilzeiten, so daß eine verbesserte Wirtschaftlichkeit durch verlängerte Standzeiten und höherem Sicherheitstandard gegeben ist,

Im erfindungsgemäßen Verfahren zur Reinigung der Gase wird z.B. in einer als Hydrolyseturm bezeichneten Vorrichtung, bestehend aus einem beheizbaren Reaktionsturm mit einer Schüttung des erfindungsgemäßen Katalysators eine katalytische Umsetzung von beispielsweise Kohlenstoffoxysulfid oder Schwefelkohlenstoff enthaltenden, zu reinigenden Gasen durchgeführt, wobei diese Schwefelverbindungen zu Schwefelwasserstoff konvertiert werden. Der so gebildete Schwefelwasserstoff, ebenso wie eventuell im Gas bereits vorhandener Schwefelwasserstoff wird dann z.B. in einer weiteren Vorrichtung, bestehend aus einem als Oxidationsturm bezeichneten Reaktionsturm mit einer Schüttung des erfindungsgemäßen Katalysators, unter Einspeisung von Luft zu elementarem Schwefel oxidiert.

Der bei der Oxidation im Oxidationsturm anfallende elementare Schwefel kann problemlos durch heißen Wasserdampf aus dem Oxidationsturm entfernt werden. Die Schüttung wird durch diese Behandlung nicht verändert.

Zur Herstellung des Katalysators kann handelsübliches Aluminiumoxid in pulverförmiger oder stückiger Form eingesetzt werden. Für ein Festbettverfahren ist die stückige Form des Katalysators zu bevorzugen. Als stückige Form seien beispielsweise Strangpresslinge, Pillen, Tabletten oder Kugeln mit Abmessungen von vorzugsweise 0,1 bis 20 mm genannt.

Bei der Herstellung des erfindungsgemäßen Katalysators wird z.B. der anorganische Träger, vorzugsweise γ-Al₂O₃ mit Verbindungen des Kupfers, Molybdäns, Zinks, Eisens 'und Chroms beaufschlagt; der so beaufschlagte Träger wird nach dem Trocknen auf 200 bis 500°C, bevorzugt 280 bis 420°C erhitzt. Das Aufbringen der genannten Metalle auf den anorganischen Träger kann beispielsweise durch bloßes Tränken oder Sprühen mit geeigneten Salzlösungen dieser Metalle erfolgen, wonach sich eine Trocknungsphase und die gesamte Erhitzungsphase anschließen. Das Trocknen wird in einer dem Fachmann bekannten Weise bei 80 bis 130°C, gegebenenfalls in einer Vakuumtrockeneinrichtung, vorgenommen. Bei der nachfolgenden Temperungsphase werden die aufgebrachten Metallverbindungen in fest auf dem anorganischen Träger haftende Oxide überführt. Als Salze der genannten Metalle kommen insbesondere die Acetate und Nitrate in Frage. Das anschließende Trocknen und Erhitzen in den genannten Temperaturbereichen erfolgt in einer Zeit von 1 bis 48 Stunden, insbesondere von 2 - 20 Stunden bzw. in einer Zeit von 1 bis 12 Stunden, insbesondere von 2 - 6 Stunden; während dieser Zeit kann die Temperatur in den angegebenen Bereichen auch erhöht werden.

Man kann zum Imprägnieren des anorganischen Trägers ebenfalls von einer wäßrigen Lösung ausgehen, in der alle Metalle in Form ihrer Salze gelöst sind. Man kann aber auch die Metalle einzeln oder in bestimmten Kombinationen nacheinander auf den Träger aufbringen, indem man die entsprechenden Lösungen nacheinander einsetzt. Nach jeder Imprägnierung kann der Katalysator getrocknet werden, damit er für die folgende Imprägnierung eine ausreichende Saugfähigkeit besitzt.

Die Erfindung soll anhand der folgenden Beispiele näher erläutert werden, ohne daß darin eine Einschränkung zu sehen ist.

### Herstellung des Katalysators

### Beispiel 1

200 g eines handelsüblichen γ-Al₂O₃ mit einer spezifischen Oberfläche von 350 m²/g und einem mittleren Korndurchmesser von 2 bis 6 mm werden mit einer frisch hergestellten Lösung getränkt, die aus
3,71 g Cu(CH₃COO)₂ · H₂O
3,14 g Fe(NO₃)₃ · 9 H₂O
4,31 g Zn(CH₃COO)₂ · 2 H₂O
und 70 g Wasser
hergestellt worden ist. Das so getränkte Aluminiumoxid wird 18 Stunden bei 100°C getrocknet. Danach wird das Aluminiumoxid mit einer weiteren Lösung getränkt, die aus
2,06 g (NH₄)₆Mo₇O₂₄ . 4 H₂O
12,67 g (NH₄)₂Cr₂O₇
und 70 g Wasser
hergestellt worden ist. Das so getränkte Aluminiumoxid wird 18 Stunden bei 100°C getrocknet und anschließend 4 Stunden bei 400°C getempert. Der so hergestellte Katalysator wird zur Konvertierung der in technischen Gasen enthaltenen Schwefelverbindungen eingesetzt (Bedingungen siehe Tabelle 1 und 4 sowie Versuchsdurchführung).

### Beispiel 2

200 g eines handelsüblichen γ-Al₂O₃ mit einer spezifischen Oberfläche von 350 m²/g und einem mittleren Korndurchmesser von 2 bis 6 mm werden mit einer frisch hergestellten Lösung getränkt, die aus
3,71 g Cu(CH₃COO)₂ · H₂O
3,14 g Fe(NO₃)₃ . 9 H₂O
4,31 g Zn(CH₃COO)₂ . 2 H₂O
und 80 g Wasser
hergestellt worden ist. Das so getränkte Aluminiumoxid wird 18 Stunden bei 100°C getrocknete Danach wird das Aluminiumoxid mit einer Lösung von
2,06 g (NH₄)₆Mo₇O₂₄ · 4 H₂O
in 70 g Wasser
getränkt. Das so getränkte Aluminiumoxid wird 18 Stunden bei 100°C getrocknet und anschließend 4 Stunden bei 400°C getempert. Der so hergestellte Katalysator wird zur Reinigung der technischen Gase eingesetzt (Bedingungen siehe Tabelle 2 sowie Versuchsdurchführung).

### Beispiel 3

200 g eines handelsüblichen γ-Al₂O₃ mit einer spezifischen Oberfläche von 350 m²/g und einem mittleren Korndurchmesser von 2 bis 6 mm werden mit einer Lösung getränkt, die aus
3,71 g Cu(CH₃COO)₂ · H₂O
2,07 g Ni(CH₃COO)₂ · 4 H₂O
4,31 g Zn(CH₃COO)₂ · 2 H₂O
und 70 g Wasser
hergestellt worden ist. Das so getränkte Aluminiumoxid wird 18 Stunden bei 100°C getrocknet. Danach wird das Aluminiumoxid mit einer weiteren Lösung getränkt, die aus
2,13 g Na₂Wo₄ · 2 H₂O
12,67 g (NH₄)₂Cr₂O₇
und 70 g Wasser
hergestellt worden ist. Das so getränkte Aluminiumoxid wird 18 Stunden bei 100°C getrocknet und anschließend 4 Stunden bei 400°C getempert. Der so hergestellte Katalysator wird zur Reinigung von technischen Gasen eingesetzt (Bedingungen siehe Tabelle 3 sowie Versuchsdurchführung).

### Reinigung der Gase (Versuchsdurchführung)

Das zu reinigende Gas wird zunächst durch einen mit Wasser gefüllten Behälter geleitet und wasserdampfgesättigt. Die Gaszusammensetzung (1) des zu konvertierenden Gases wird mittels eines Gaschromatographen genau bestimmt. Das Gas wird dann in einen Hydrolyseturm (500 ml) geleitet. Der Hydrolyseturm besteht aus einem doppelwandigen Gefäß, wobei mittels einer Flüssigkeit die Temperatur des Reaktionsturmes eingestellt werden kann, und ist mit erfindungsgemäßem Katalysator gefüllt. Das konvertierte Gas verläßt den Hydrolyseturm. Danach wird seine Zusammensetzung gemessen (2). Anschließend tritt das zu reinigende Gas in einen Oxidationsturm (500 ml) ein. Dieser ist ebenso aufgebaut wie der beschriebene Hydrolyseturm und ist mit dem gleichen Katalysator gefüllt. Gleichzeitig wird Luft in mindestens stöchiometrischer Menge, bezogen auf Sauerstoff und Schwefelwasserstoff, in den Oxidationsturm eingeleitet.

Das nunmehr von den schwefelhaltigen Verbindungen gereinigte Gas verläßt den Oxidationsturm und wird auf Reinheit (3) geprüft (siehe Tabellen 1 bis 4 ).

**Tabelle 1**

| Katalysator gemäß Beispiel 1 | | | | | | |
|---|---|---|---|---|---|---|
| technisches Gas : N₂ | | | | | | |
| Gasdurch Satz [1/h] | Temperatur bei der | | Konzentrationen des Gases | | | |
| | Konvertierung [°C] | Oxidation [°C] | bei (1) | bei (2) | bei (3) | |
| | | | an COS [vpm] | an COS [vpm] | an COS [vpm] | an H₂S [vpm] |
| 500 | 130 | 38 | 2310 | ≤10 | ≤10 | ≤10 |
| 800 | 130 | 38 | 2310 | ≤10 | ≤10 | ≤10 |
| 800 | 60 | 40 | 6880 | ≤10 | ≤10 | ≤10 |
| 1600 | 89 | 40 | 6880 | ≤10 | ≤10 | ≤10 |
| 800 | 60 | 40 | 5290 | 14 | ≤10 | ≤10 |
| 800 | 48 | 40 | 5200 | 21 | ≤10 | ≤10 |
| 300 | 20 | 24 | 6880 | 37 | ≤10 | ≤10 |
| vpm - volume parts per million | | | | | | |
| bei (1) - Konzentration an COS vor Konvertierung | | | | | | |
| bei (2) - Konzentration an COS nach Konvertierung | | | | | | |
| bei (3) - Konzentration an COS bzw. an H₂S nach Oxidation | | | | | | |

**Tabelle 2**

| Katalysator gemäß Beispiel 2 | | | | | | |
|---|---|---|---|---|---|---|
| technisches Gas : N₂ | | | | | | |
| Gasdurchsatz [1/h] | Temperatur bei der | | Konzentrationen des Gases | | | |
| | Konvertierung [°C] | Oxidation [°C] | bei (1) | bei (2) | bei (3) | |
| | | | an COS [vpm] | an COS [vpm] | an COS [vpm] | an H₂S [vpm] |
| 800 | 40 | 28 | 4200 | 1900 | ≤20 | ≤10 |
| 800 | 50 | 32 | 12600 | 3500 | ≤20 | ≤10 |
| 800 | 80 | 37 | 12600 | 1200 | ≤10 | ≤10 |
| 800 | 120 | 54 | 12600 | 205 | ≤10 | ≤10 |
| 800 | 150 | 61 | 12600 | 128 | ≤10 | ≤10 |

**Tabelle 3**

| Katalysator gemäß Beispiel 3 | | | | | | |
|---|---|---|---|---|---|---|
| technisches Gas : N₂ | | | | | | |
| Gasdurcheatz [1/h] | Temperatur bei der | | Konzentrationen des Gases | | | |
| | Konvertierung [°C] | Oxidation [°C] | bei (1) | bei (2) | bei (3) | |
| | | | an COS [vpm] | an COS [vpm] | an COS [vpm] | an H₂S [vpm] |
| 300 | 59 | 21 | 12060 | 2740 | ≤10 | ≤10 |
| 300 | 70 | 34 | 12060 | 1460 | ≤10 | ≤10 |
| 300 | 100 | 42 | 11770 | 1129 | ≤10 | ≤10 |
| 800 | 105 | 42 | 11950 | 4600 | ≤10 | ≤10 |
| 800 | 134 | 54 | 11590 | 961 | ≤10 | ≤10 |
| 800 | 150 | 62 | 11590 | 709 | ≤10 | ≤10 |

**Tabelle 4**

| Katalysator gemäß Beispiel 1 | | | | | | |
|---|---|---|---|---|---|---|
| technisches Gas: CO | | | | | | |
| Gasdurchsatz [1/h] | Temperatur bei der | | Konzentrationen des Gases | | | |
| | Konvertierung [°C] | Oxidation [°C] | bei (1) | bei (2) | bei (3) | |
| | | | an COS [vpm] | an COS [vpm] | an COS [vpm] | an H₂S [vpm] |
| 300 | 41 | 28 | 4450 | ≤130 | ≤10 | ≤10 |
| 300 | 60 | 40 | 4300 | ≤2D | ≤10 | ≤10 |
| 500 | 41 | 28 | 2300 | ≤15 | ≤10 | ≤10 |
| 500 | 60 | 40 | 2300 | ≤15 | ≤10 | ≤10 |
| 800 | 130 | 51 | 2300 | ≤10 | ≤10 | ≤10 |
| 300 | 130 | 51 | 2300 | ≤10 | ≤10 | ≤10 |
| 300 | 130 | 51 | 7180 | ≤15 | ≤10 | ≤10 |

Wie die Versuchsergebnisse zeigen, wird durch den erfindungsgemäßen Katalysator z.B. die Schwefelverbindung COS praktisch vollständig in H₂S konvertiert, so daß sie dann anschließend als H₂S praktisch vollständig zu Schwefel oxidiert werden kann und damit aus dem Gas entfernt wird. Der Schwefel haftet am Material (z.B. am erfindungsgemäßen Katalysator) im Oxidationsturm, wo er einfach mittels Wasserdampf ausgetrieben werden kann, ohne daß das Material Schaden nimmt.

## Patentansprüche

1. Katalysatoren, die eine quantitative Entfernung von Schwefelverbindungen aus technischen Gasen bei Temperaturen von 20 - 150°C erlauben wobei die Katalysatoren aus einem anorganischen, abriebfesten. nicht brennbarem Träger bestehen, der mit einem Gemisch aus Oxiden von Metallen gleichmäßig mit jeweils 0,05 bis 4 Gew.-%, gerechnet als Metalloxid und bezogen auf die Menge des Trägermaterials aus der Gruppe bestehend aus Aluminiumoxid, Spinellen, Magnesium Aluminium Oxid, Zeolithen oder Glimmer, der eine Oberfläche von 20 bis 400 m²/g aufweist, imprägniert ist, dadurch erhältlich. daß ein anorganischer. abriebfester, nicht brennbarer Träger mit wäßrigen Lösungen von Nitraten und Acetaten von Metallen aus der Gruppe bestehend aus Cu, Zn, Fe, Co und Ni und Ammoniumsalzen der Chromate. Molybdate und/oder Wolframate getränkt oder besprüht wird, wobei mindestens drei Metallverbindungen aufgebracht werden, von denen eine von einem Metall aus der Gruppe bestehend aus Cr, Mo und W stammt, getrocknet und bei 200 bis 500°C getempert wird.

2. Katalysatoren gemäß Anspruch 1. **dadurch gekennzeichnet, daß** es sich bei dem Trägermaterial um Alumininmoxid handelt.

3. Katalysatoren gemäß Ansprüchen 1 und 2, **dadurch gekennzeichnet, daß** es sich bei den Metallverbindungen um Nitrate und/oder Acetate von Kupfer, Eisen und Zink sowie Ammoniummolybdat und Ammoniumdichromat handelt.

4. Verfahren zur Herstellung der Katalysatoren gemäß Anspruch 1, **dadurch gekennzeichnet, daß** der anorganische Träger in Granulatform mit einem mittleren Durchmesser von 1 bis 10 mm vorgelegt wird, mit wässrigen Lösungen von Nitraten und Acetaten der Metalle aus der Gruppe bestehend aus Cu, Zn, Fe, Co und Ni und Ammoniumsalzen der Chromate, Molybdate und/oder Wolframate getränkt oder besprüht wird, wobei mindestens drei Metallverbindungen aufgebracht werden, von denen ein Metall aus der Gruppe bestehend aus Cr, Mo und W stammt, getrocknet und bei 200 bis 500°C getempert wird.

5. Verfahren gemäß Anspruch 2, **dadurch gekennzeichnet, daß** der Träger mit mehreren Lösungen mit einer oder mehreren Verbindungen nacheinander behandelt wird und gegebenenfalls nach jeder Behandlung getrocknet wird.

6. Verwendung der Katalysatoren gemäß Anspruch I zur praktisch vollständigen Entfernung von Schwefelverbindungen, insbesondere COS, CS₂ und organischen Schwefelverbindungen, insbesondere Mercaptane aus technischen Gasen, insbesondere Methan, CO₂, N₂. CO und Erdgas indem die zu reinigenden technischen Gase
a) mit Wasserdampf beladen werden, anschließend
b) über einen Katalysator gemäß Anspruch 1 bei Temperaturen zwischen 20 und 150°C geleitet werden und dann
c) von dem in b) gebildeten, sowie von dem von vornherein im Gas vorhandenem Schwefelwasserstoff befreit werden, indem die Gase nach b) zusammen mit Luft und/oder Sauerstoff über einen Katalysator gemäß Anspruch 1 bei Temperaturen von 15 bis 50°C geleitet werden und dieser Katalysator regeneriert wird, vorzugsweise mit Wasserdampf, um den in gebildeten Schwefel vom Katalysator zu entfernen.

## Claims

1. Catalysts which permit the quantitative removal of sulfur compounds from industrial gases at temperatures from 20 °C to 150 °C, the catalysts being composed of an inorganic, abrasion resistant, non combustible support which is impregnated uniformly with a mixture of oxides of metals, each in quantity of 0.05 wt.% to 4 wt.% calculated as metal oxide and based on the amount of support material, of the group comprising aluminium oxide, spinels, magnesium aluminium oxide, zeolites or mica and which has a surface area of 20 m²/g to 400 m²/g, obtainable in such a way that an inorganic, abrasion resistant, non combustible support is impregnated or sprayed with aqueous solutions of nitrates and acetates of metals of the group comprising Cu, Zn, Fe, Co and Ni and ammonium salts of chromates, molybdates and/or tungstates, at least three metal compounds being applied, one of which comes from a metal of the group comprising Cr, Mo and W, dried and tempered at 200 °C to 500 °C.

2. Catalysts according to claim 1, **characterised in that** the support material is aluminium oxide.

3. Catalysts according to claims 1 and 2, **characterised in that** the metal compounds are nitrates and/or acetates of copper, iron and zinc, and ammonium molybdate and ammonium dichromate.

4. A process for the preparation of catalysts according to claim 1, **characterised in that** the inorganic support is introduced in the form of granules with an average diameter of 1 mm to 10 mm, impregnated or sprayed with aqueous solutions of nitrates and acetates of metals of the group comprising Cu, Zn, Fe, Co and Ni and ammonium salts of chromates, molybdates and/or tungstates, at least three metal compounds being applied, of which one metal comes from the group comprising Cr, Mo and W, dried and tempered at 200 °C to 500 °C.

5. A process according to claim 2, **characterised in that** the support is treated successively with several solutions containing one or more compounds and is optionally dried after each treatment.

6. The use of the catalysts according to claim 1 for the practically complete removal of sulfur compounds, particularly COS, CS₂ and organic sulfur compounds, particularly mercaptans from industrial gases, particularly methane, CO₂, N₂, CO and natural gas, wherein the industrial gases to be purified are
a) charged with steam, then
b) passed over a catalyst according to claim 1 at temperatures from 20 °C to 150 °C, and then
c) freed from the hydrogen sulfide formed in b) and from hydrogen sulfide present in the gas from the outset by passing the gases after b) together with air and/or oxygen over a catalyst according to claim 1 at temperatures from 15 °C to 50 °C and regenerating this catalyst, preferably with steam, in order to remove the sulfur formed in from the catalyst.

## Revendications

1. Catalyseurs permettant une élimination quantitative des dérivés du soufre contenus dans des gaz techniques à des températures de 20 à 150°C, ces catalyseurs consistant en un support minéral résistant à l'abrasion et non combustible, imprégné uniformément par un mélange d'oxydes métalliques, en quantité de 0,05 à 4 % en poids, exprimé en oxyde métallique, et par rapport au poids de la matière de support, pour chacun d'eux, ces oxydes métalliques étant choisis dans le groupe consistant en alumine, spinelles, oxyde de magnésium-aluminium, zéolites ou mica, à une surface de 20 à 400 m²/g, qu'on obtient en appliquant sur un support minéral, résistant à l'abrasion et non combustible, des solutions aqueuses de nitrates et d'acétates de métaux du groupe consistant en Cu, Zn, Fe, Co et Ni et de sels d'ammonium des chromates, molybdates et/ou tungstates, avec application d'au moins trois dérivés métalliques dont l'un est un dérivé d'un métal du groupe consistant en Cr, Mo et W, puis en séchant et en cuisant à des températures de 200 à 500°C.

2. Catalyseurs selon la revendication 1, **caractérisés en ce que** la matière de support consiste en alumine.

3. Catalyseurs selon les revendications 1 et 2, **caractérisés en ce que** les dérivés métalliques sont des nitrates et/ou acétates du cuivre, du fer et du zinc, ou bien du molybdate d'ammonium et du bichromate d'ammonium.

4. Procédé de préparation des catalyseurs selon la revendication 1, **caractérisé en ce que** l'on imprègne le support minéral à l'état de granulés à un diamètre moyen de 1 à 10 000 mm ou on pulvérise sur ce support minéral des solutions aqueuses de nitrates et d'acétates des métaux du groupe consistant en Cu, Zn, Fe, Co et Ni et de sels d'ammonium des chromates, molybdates et/ou tungstates, en appliquant au moins trois dérivés métalliques dont l'un est un dérivé d'un métal du groupe consistant en Cr, Mo et W, après quoi on sèche et on cuit à des températures de 200 à 500°C.

5. Procédé selon la revendication 2, **caractérisé en ce que** l'on traite le support successivement par plusieurs solutions d'un ou plusieurs composés en séchant le cas échéant après chaque traitement.

6. Utilisation des catalyseurs selon la revendication 1, pour l'élimination pratiquement complète de dérivés sulfurés, en particulier de COS, CS₂ et les dérivés organiques du soufre, en particulier les mercaptans, de gaz techniques, en particulier du méthane, du CO₂, du N₂, du CO et du gaz naturel
a) en chargeant les gaz techniques à épurer de vapeur d'eau, puis
b) en les envoyant sur un catalyseur selon la revendication 1 à des températures de 20 à 150°C, puis
c) en les débarrassant du sulfure d'hydrogène formé en b) et du sulfure d'hydrogène présent à l'origine dans les gaz en envoyant les gaz après l'opération b), avec de l'air et/ou de l'oxygène, sur un catalyseur selon la revendication 1, à des températures de 15 à 50°C puis en régénérant ce catalyseur, de préférence à l'aide de vapeur d'eau, pour élimination du soufre formé sur le catalyseur.
